(19) Europäisches Patentamt
European Patent Office
Office européen des brevets

(11) **EP 2 013 039 B1**

(12) **EUROPÄISCHE PATENTSCHRIFT**

(45) Veröffentlichungstag und Bekanntmachung des Hinweises auf die Patenterteilung:
**21.06.2017 Patentblatt 2017/25**

(21) Anmeldenummer: **07728190.5**

(22) Anmeldetag: **17.04.2007**

(51) Int Cl.:
*G01P 7/00* (2006.01)     *G01P 15/16* (2013.01)
*G01P 15/00* (2006.01)     *G01P 3/22* (2006.01)
*B60T 8/172* (2006.01)     *B60T 8/171* (2006.01)
*B60C 23/06* (2006.01)

(86) Internationale Anmeldenummer:
**PCT/EP2007/053727**

(87) Internationale Veröffentlichungsnummer:
**WO 2007/125033 (08.11.2007 Gazette 2007/45)**

(54) **MESSEINRICHTUNG FÜR FAHRZEUGDATEN, INSBESONDERE FÜR DIE GESCHWINDIGKEIT EINES AUF RÄDERN LAUFENDEN FAHRZEUGES**

MEASURING DEVICE FOR VEHICLE DATA, IN PARTICULAR FOR THE SPEED OF A VEHICLE RUNNING ON WHEELS

DISPOSITIF DE MESURE POUR DES DONNÉES DE VÉHICULE, EN PARTICULIER POUR LA VITESSE D'UN VÉHICULE À ROUES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **28.04.2006 DE 102006020471**

(43) Veröffentlichungstag der Anmeldung:
**14.01.2009 Patentblatt 2009/03**

(73) Patentinhaber: **Trajet GmbH**
**38106 Braunschweig (DE)**

(72) Erfinder: **HELCK, Christian**
**38104 Braunschweig (DE)**

(74) Vertreter: **Einsel, Martin**
**Patentanwälte Einsel & Kollegen**
**Jasperallee 1a**
**38102 Braunschweig (DE)**

(56) Entgegenhaltungen:
**US-A1- 2004 225 423     US-B1- 6 466 887**

**Beschreibung**

Die Erfindung betrifft eine Messeinrichtung für Fahrzeugdaten, insbesondere für die Geschwindigkeit eines auf Rädern laufenden Fahrzeuges.

Es ist in vielen Fällen von Interesse, die Geschwindigkeit eines Fahrzeuges zu kennen. Der Fahrzeugführer benötigt die Geschwindigkeitsangaben, um Anhaltspunkte für die voraussichtlichen Reaktionen seines Fahrzeuges bei bestimmten Fahrmanövern zu bekommen; zu beachten ist natürlich auch, dass er bestimmte Geschwindigkeitsbeschränkungen einhalten muss. Auch zum Abschätzen eines möglichen Risikos bei einem Überholvorgang ist eine möglichst genaue Kenntnis der aktuellen Geschwindigkeit des eigenen Fahrzeuges wünschenswert. Aus der Kenntnis der Geschwindigkeit lassen sich auch Rückschlüsse auf die Geschwindigkeiten anderer Fahrzeuge oder sonstiger beweglicher Körper schließen.

Üblicherweise wird die Geschwindigkeit eines Fahrzeuges, beispielsweise eines Kraftfahrzeuges auf einer Straße, aus der Umdrehungsgeschwindigkeit einer Fahrzeugachse ermittelt. Bekannt sind sogenannte Tachowellen, die durch mechanische und in jüngerer Zeit durch elektronische Umsetzung aus der Umdrehungszahl der Fahrzeugvorderachse oder von damit verbundenen Elementen einerseits die Zahl der zurückgelegten Wegstrecke, insbesondere Kilometer und andererseits die Fahrzeuggeschwindigkeit errechnen und dem Fahrzeugführer anzeigen. Diese Messungen sind in Grenzen genau und ihre Anzeigegenauigkeit ist auch zur Erhöhung der Verkehrssicherheit vorgeschrieben.

Die herkömmlichen Methoden zur Messung der Fahrzeuggeschwindigkeit gehen meistens von der Drehbewegung der Fahrzeugachse aus. Sie messen also die Rotationsgeschwindigkeit der Fahrzeugachse relativ zu dem Fahrgestell oder einem anderen sich nicht drehenden Teil des Fahrzeugs. Bei Kraftfahrzeugen ist die Messung zwar präziser, gleichwohl bleiben Ungenauigkeiten, da die Messung der Umdrehungsgeschwindigkeit der Fahrzeugachse und die anschließende Auswertung für die Anzeige im Kraftfahrzeug von festen Werten des Raddurchmessers ausgehen muss und natürlich einen Schlupf zwischen einerseits der Fahrzeugachse und dem Rad und andererseits zwischen dem Rad und der Fahrbahnoberfläche vernachlässigen muss.

Für ein Fahrrad wird in der DE 100 37 377 A1 vorgeschlagen, an das Vorderrad des Fahrzeuges selbst elektromagnetische oder elektrostatische oder ähnliche Sensoren anzuklemmen, damit ein entsprechender Fahrradtachometer möglichst leicht demontiert und angebracht werden kann. Auch eine Recheneinrichtung solle zusammen mit dem Sensor an den Speichen des Fahrrades angebracht werden. Zur Art der Messung werden keine näheren Angaben vorgelegt.

Aus der DE 10 2005 014 500 A1 geht ein Sensorsystem hervor, mit dem Vibrationen am Rad erfasst werden sollen, um Anomalien der Radbewegung zu detektieren.

Die meisten verwendeten Messeinrichtungen haben den Nachteil, dass sie sich schlecht montieren lassen, da man an versteckte Teile des Fahrzeugs gelangen muss. Neuerdings werden in Fahrzeugen auch so genannte Bus-Systeme verwendet, um Informationen, wie z.B. auch die Fahrzeuggeschwindigkeit, im Fahrzeug zu übertragen. An diese dürfen normalerweise, aus sicherheitsrelevanten Gründen, keine Messeinrichtungen angeschlossen werden. Außerdem ist für verschiedene Fahrzeugtypen meist eine Anpassung notwendig. Die Messeinrichtung muss zudem für jedes Fahrzeug parametriert und geeicht werden, da die Verfahren keine absoluten Messwerte liefern, sondern nur mit zur Geschwindigkeit proportionalen Werten, wie, z. B. der Anzahl der Radumdrehungen pro Minute, arbeiten.

Bekannt ist grundsätzlich auch, die Geschwindigkeit aus der Integration einer Beschleunigung zu erhalten. Diese Methode eignet sich gut, um ausgehend von einer bekannten Geschwindigkeit $v_0$ auf die Geschwindigkeit $v(t)$ nach folgender Formel zu schließen:

$$v(t) = v_0 + \int a(t)dt$$

Die Geschwindigkeit $v_0$ muss dabei aber immer wieder abgeglichen werden, da die fortschreitende Integration zu einer Abdrift des Messwertes führt und so schon nach kurzer Zeit keine genauen Werte mehr liefert.

Höhere Anforderungen an die Genauigkeit einer Messung der Geschwindigkeit eines Fahrzeuges werden beispielsweise aufgestellt, wenn es um Messungen bei der Verkehrsüberwachung geht. So kann aus einem fahrenden Fahrzeug heraus durch Nachfahren auch die Geschwindigkeit eines vorausfahrenden Fahrzeuges bestimmt werden, wobei dann selbstverständlich eine besonders präzise Kenntnis der eigenen Geschwindigkeit erforderlich ist, um auch Relativmessungen noch brauchbar und beweiskräftig zu halten.

Dies ist auch deshalb problematisch, weil die herkömmlich auf dem Tachometer des nachfahrendes Fahrzeugs angezeigte Geschwindigkeit auch noch in irgendeiner geeigneten Form abgegriffen oder festgehalten werden muss, um sie mit den Beobachtungsdaten für das vorausfahrende Fahrzeug in Verbindung bringen zu können. Ein solcher Abgriff ist technisch schwierig, da natürlich ein Eingriff in die sicherheitstechnischen Bereiche des nachfahrenden Fahrzeugs nicht erfolgen darf.

Aus der US 6,466,887 B1 ist eine Kombination von zwei gravimetrischen Rotationssensoren bekannt, die die Beschleunigungen benachbart zur Drehachse von Fahrzeugrädern aufnehmen und daraus die Fahrzeuggeschwindigkeit ermitteln.

Die EP 0 517 082 A2 beschreibt ein Verfahren und eine Vorrichtung zur fälschungssicheren Erfassung der Radumdrehungszahl von Fahrzeugen durch Überwachung der Umdrehungszahl der Räder. Dabei werden Beschleunigungsgrößen bestimmt, die der Erdbeschleunigung und/oder der Zentrifugalbeschleunigung entsprechen.

Gleichwohl bleibt der Wunsch nach präziseren Möglichkeiten zur Messung der Geschwindigkeit von Fahrzeugen. Es besteht außerdem der Wunsch, auch andere Fahrzeugdaten zu messen und beispielsweise Angaben über den Durchmesser eines Rades automatisch während der Fahrt zu ermitteln.

Aufgabe der Erfindung ist es daher, eine Messeinrichtung und ein Verfahren für die Messung von Fahrzeugdaten vorzuschlagen, die insbesondere eine möglichst präzise Messung der Geschwindigkeit eines auf Rädern laufenden Fahrzeuges und eine Ermittlung des Durchmessers des Fahrzeugrades während der Fahrt ermöglichen.

Diese Aufgabe wird gelöst durch eine Messeinrichtung für die Messung von Fahrzeugdaten, insbesondere der Geschwindigkeit eines auf Rädern laufenden Fahrzeuges, mit einem ersten Sensor zum Messen der auf den ersten Sensor wirkenden Beschleunigung, mit einem zweiten Sensor zum Messen der auf den zweiten Sensor wirkenden Beschleunigung, wobei beide Sensoren an ein und dem selben Rad angeordnet sind und sich mit diesem drehen, und wobei beide Sensoren so angeordnet sind, dass sie Beschleunigungen messen, die jeweils senkrecht zur Achse des Rades wirken und die in einem Winkel zueinander stehen, mit einer Auswerteeinrichtung, der die Messwerte der beiden Sensoren zugeführt werden, wobei die Auswerteeinrichtung so ausgebildet und geschaltet ist, dass sie aus den Messwerten der beiden Sensoren die Beschleunigung des Rades in Fahrtrichtung des Fahrzeuges und daraus die aktuelle Fahrzeuggeschwindigkeit ermittelt, wobei die Auswerteeinrichtung so ausgebildet und geschaltet ist, dass sie aus den gleichen Messwerten auch die Winkelbeschleunigung des Rades über die Änderung der Drehfrequenz ermittelt und durch Vergleich dieser Auswertung mit der Beschleunigung des Rades in Fahrtrichtung der Durchmesser des Rades absolut ermittelt wird.

Bevorzugt wird dabei, dass die Auswerteeinrichtung so ausgebildet und geschaltet ist, dass aus dem so ermittelten absoluten Durchmesser des Rades und den Messwerten der beiden Sensoren die absolute Fahrzeuggeschwindigkeit bestimmt wird.

Erfindungsgemäß wird so eine präzise absolute Geschwindigkeitsmesseinrichtung geschaffen, die nicht parametriert werden muss und in Fahrzeugen auf einfache Weise nachgerüstet werden kann.

Die Aufgabe wird auch gelöst durch ein Verfahren für die Messung der Geschwindigkeit eines auf Rädern laufenden Fahrzeuges, bei dem während der Bewegung des Fahrzeuges und der Drehung eines Rades eine erste, auf einen sich mit dem Rad drehenden Punkt wirkende und senkrecht zur Achse des Rades wirkende Beschleunigung gemessen wird, bei dem während der Bewegung des Fahrzeuges und der Drehung eines Rades eine zweite, auf einen sich mit dem Rad drehenden Punkt wirkende und senkrecht zur Achse des Rades wirkende Beschleunigung gemessen wird, die in einem Winkel zur ersten Beschleunigung wirkt, bei dem die Messwerte der beiden gemessenen Beschleunigungen einer Auswerteeinrichtung zugeführt werden, bei dem die Messwerte miteinander verknüpft und daraus die Beschleunigung der Achse des Rades des Fahrzeuges in Fahrtrichtung ermittelt wird, bei dem aus dieser ermittelten Beschleunigung die aktuelle Fahrzeuggeschwindigkeit ermittelt wird, und bei dem aus den gleichen Messwerten auch die Winkelbeschleunigung des Rades über die Änderung der Drehfrequenz ermittelt und durch Vergleich dieser Auswertung mit der Beschleunigung der Achse des Rades in Fahrtrichtung der Durchmesser des Rades absolut ermittelt wird.

Bevorzugt ist es, wenn bei diesem Verfahren aus dem so ermittelten Durchmesser des Rades und den Messwerten der beiden Sensoren die absolute Fahrzeuggeschwindigkeit bestimmt wird.

Die Erfindung macht von einem in diesem Zusammenhang bisher selten genutzten Effekt Gebrauch: Neben der Beschleunigung in Fahrtrichtung, die über die Amplitude der Schwingungssignale bestimmt wird, wird ebenfalls die Winkelgeschwindigkeit über die Frequenz der Schwingungssignale bestimmt. Es werden hiermit bevorzugt zwei typische Charakteristika der erfindungsgemäß gewonnenen Messsignale ausgewertet.

Die Erfindung verlegt nun die Messung von der Fahrzeugachse an das Rad selbst. Dabei werden zwei Sensoren benutzt, die die Beschleunigungen messen, die während der Drehung des Rades auf sie wirken. Dies ist neben der Fahrzeugbeschleunigung in erster Linie die nach unten wirkende Erdbeschleunigung. Bei einer rollenden Bewegung des Rades würden somit beide Sensoren einen Sinusverlauf feststellen, da sie sich selbst drehen und mithin die Gravitation sich aus seiner Sicht sinusförmig ändert. Den beiden sinusförmigen Schwingungen ist die Fahrzeugbeschleunigung überlagert. Sie ändert aber nichts Wesentliches an dem sinusförmigen Verlauf der Signale, die durch die Anordnung der beiden Sensoren um eine Phase verschoben sind.

Es ergeben sich dann nämlich zwei Sinusschwingungen, die die beiden folgenden Messwerte als kontinuierliches Signal liefern:

$$a_x(t)=g\ cos(\omega t)-a\ sin(\omega t)$$

$$a_y(t)=g\ sin(\omega t)+a\ cos(\omega t)$$

Quadriert man nun diese beiden Formeln beziehungsweise Signale und addiert die so entstehenden Gleichungen, so entfallen sämtliche schwingungsabhängigen Komponente und es ergibt sich folgende Formel:

$$a_x^2 + a_y^2 = g^2 + a^2$$

Da die Größe der Erdbeschleunigung *g* bekannt ist, kann aus den Messwerten beziehungsweise Signalen der beiden Sensoren zu jedem beliebigen Zeitpunkt die Beschleunigung des Rades in Fahrtrichtung ermittelt werden.

Die Messgrößen der Beschleunigungssensoren werden über die Erdbeschleunigung geeicht. Ist nämlich die Fahrzeugbeschleunigung *a=0* so kann über die Amplitude der Schwingungen für die beiden Sensoren der Messwert für *g* ermittelt und somit geeicht werden. Die Tatsache, dass die Geschwindigkeit $v_0$=const. ist, wird darüber festgestellt, dass sich die Periodenlänge *T* der Schwingung nicht ändert.

Die Periodenlänge *T* einer Schwingung würde sich mithin zu seiner Winkelgeschwindigkeit *ω* wie *T=1/ω* verhalten. Daraus ergibt sich automatisch die mittlere Fortbewegungsgeschwindigkeit des Rades *zu v=2πRω*, wobei *R* der Radius des Rades ist.

Um jetzt auch *R* ermitteln zu können wird in der bevorzugten Ausführungsform folgendes Verfahren verwendet. Es gilt

$$V = 2\pi R\omega$$

Leitet man diese Formel diskret nach der Zeit ab, betrachtet also die Veränderung während einer Radumdrehung in einem Zeitraum *T,* so erhält man:

$$\Delta V = \overline{a}T = 2\pi R\Delta\omega$$

Umgeformt ergibt sich

$$R = \frac{\overline{a}T}{2\pi\Delta\omega}$$

*Δω* kann für eine Umdrehung direkt aus der Verlängerung, oder auch Verkürzung, der Periodenlänge *T* um *Δt* berechnet werden, denn es gilt:

$$\Delta\omega = \frac{1}{\Delta t}$$

Damit ergibt sich der Radius als:

$$R = \frac{\overline{a}T\Delta t}{2\pi}$$

Der Radius kann also ermittelt werden aus der Länge der Periode, der Änderung der Periodenlänge während einer Periode und dem Mittelwert der Beschleunigung während einer Periode. All diese Größen sind absolut bekannt, womit der Radius absolut ermittelt werden kann und damit dann natürlich auch die Fahrzeuggeschwindigkeit. Misst man mit zwei Sensoren, so hat man vier Nulldurchgänge pro Radumdrehung zur Verfügung, kann also auch mit den Veränderungen während einer viertel Radumdrehung arbeiten. Das Verfahren und die Formel ändert sich dadurch nicht. Man benutzt lediglich die Werte, die sich bei einer viertel Radumdrehung ergeben und erhöht damit die zeitliche Auflösung der Messung.

Zur Ermittlung des Radius wird also die Änderung der Schwingungsfrequenz ins Verhältnis mit dem Mittelwert der Beschleunigung in Fahrtrichtung gesetzt und daraus der Raddurchmesser bestimmt. Setzt man voraus, dass sich der Raddurchmesser nicht schlagartig ändern kann, kann zur Erhöhung der Genauigkeit und zur Prüfung der Plausibilität der Messung, der Radius öfters ermittelt werden.

Hat man den Radius so ermittelt, kann über die Formel

$$V = \frac{2\pi R}{T}$$

die Geschwindigkeit vier mal pro Umdrehung als Mittelwert bestimmt werden. Die Geschwindigkeit kann dabei auch ausgehend von dem so ermittelten Wert unter Zuhilfenahme der Beschleunigung durch Integration berechnet werden. Eine Berechnung der Geschwindigkeit nur durch Integration führt auf Grund des Driftverhaltens von Integratoren zu Messungen, die nach kurzer Zeit nicht mehr gültig sind. Die Auswertung der Frequenz zur Ermittlung der Geschwindigkeit liefert hierzu Stützstellen $v_0$, die nach der folgenden Formel Geschwindigkeiten über Grund zu jedem beliebigen Zeitpunkt liefern können.

$$v(t) = v_0 + \int a(t)dt$$

Von besonderem Vorteil ist es, dass diese Messung völlig unabhängig und zusätzlich zur herkömmlichen Geschwindigkeitsmessung im Fahrzeug erfolgen kann. Es ist also auch möglich, diese Daten zu verwenden, ohne in die sicherheitsrelevanten Bereiche des Fahrzeuges überhaupt einzugreifen. Die Messung der Beschleunigung *a* des Fahrzeuges beziehungsweise die Ermittlung dieses Wertes aus den Messwerten und Signalen der beiden Sensoren kann entweder noch am Rad bei den beiden Sensoren in einer entsprechenden Auswertungseinheit erfolgen, oder aber auch in einer Auswertungseinheit etwa im Bereich des Innenraumes des Fahrzeugs, wobei der Auswertungseinheit auch andere Messwerte zugeführt werden können.

Bevorzugt vorgesehen werden auch Filter, die die Messwerte der beiden Sensoren filtern und so unerwünschte Störsignale eliminieren. Diese können beispielsweise durch Radschwingungen auftreten.

Die Messwerte werden zum Zwecke der Weiterverarbeitung digitalisiert und einem Mikrokontroller zugeführt. Die Filterung der Signale kann entweder auf der analogen oder auf der digitalisierten Seite der Verarbeitung erfolgen.

Mit der Erfindung werden auch noch weitere Möglichkeiten geschaffen, die herkömmlich noch nicht in Betracht gezogen werden konnten. So kann die Auswerteeinheit beziehungsweise der Mikrokontroller auch den Reifendurchmesser in der beschriebenen Weise immer wieder ermitteln und mit einem Sollwert vergleichen und hieraus vergleichsweise einfach Abweichungen feststellen, die beispielsweise auf unzureichenden Reifendruck zurückgehen können oder aber auch auf einen bestimmten Zustand erreichende Abnutzung des Reifens schließen lassen. Auf diese Weise kann sehr einfach aus den Messwerten zusätzlich eine Warnung an den Fahrzeugführer ausgegeben werden.

Das System ist außerdem in vorteilhafter Weise selbst kalibrierend. Der Wert der Erdbeschleunigung g dient dann nämlich neben einer konstanten Zeitbasis auch als Eichmaß für das System. Geeicht wird dann, wenn die Beschleunigung $a=0$ ist, da dann lediglich die Erdbeschleunigung g auf die beiden Sensoren wirkt. Das ermittelte absolute Geschwindigkeitssignal kann dann entsprechend zur Kalibrierung verwendet werden.

Die beiden Sensoren werden bevorzugt durch eine integrierte Stromversorgung betrieben.

Der Sensor kann auch als Schlupfsensor benutzt werden, indem basierend auf zuvor in beschriebener Weise ermittelten aktuellen Werten für R das Verhältnis von Winkelbeschleunigung und Radbeschleunigung $a$ verglichen wird. Gibt es bei bekanntem $R$ hier Abweichungen, sind diese auf Schlupf zurück zu führen, sodass der Schlupf bei vorheriger Kalibrierung auch absolut ermittelt werden kann. Hierüber ist ebenfalls die Ermittlung der absoluten Fahrzeuggeschwindigkeit über Grund möglich.

Die Messeinrichtung kann auch zur Erweiterung eines GPS-Systems zur Positionsbestimmung des Fahrzeugs verwendet werden. Ist beispielsweise der GPS-Empfang eingeschränkt, ist trotzdem eine Positionsbestimmung aus der Ermittlung der absoluten Fahrzeuggeschwindigkeit möglich.

Der Sensor kann auch als Wegsensor benutzt werden, in dem über den bekannten Radumfang und die gemessene Anzahl der Umdrehungen ab einem bestimmten Zeitpunkt der zurückgelegte Weg ermittelt wird.

Da die Messeinrichtung auch die Beschleunigung $a$ misst, registriert sie auch jedes sehr starke Abbremsen. Dies kann beispielsweise in bevorzugten Ausführungsformen in Kombination mit einem Videosystem als Auslöser für eine Videoaufnahme verwendet werden. Alternativ oder zusätzlich können so auch nach einem Unfall Möglichkeiten für eine Unfalldetektion in einem Unfalldatenspeicher geschaffen werden. Hierzu wird zusätzlich ein Speicher vorgesehen, in dem Messwerte gehalten werden. Man könnte jeweils die letzten aktuellen Werte speichern, um diese dann nach einem Unfall aus dem Sensor zu entnehmen.

Die Stromversorgung kann beispielsweise aus einer Batterie bestehen. Es ist aber auch ein Akku denkbar, der über einen Mechanismus durch die Radbewegung aufgeladen wird. Der Akku kann auch durch eine Solarzelle im aufgeladenen Zustand gehalten werden. Denkbar wäre aber auch eine Zufuhr von Strom mittels Induktion von außen.

Möglich wäre auch ein Stromsparmodus für die Sensoren der Messeinrichtung. Diese würden die kontinuierliche Messung nur dann durchführen, wenn die Geschwindigkeit über einem definierten Grenzwert liegt.

Der Sensor kann ferner über Plausibilitätsprüfungen auch selbst feststellen, ob er richtig, das heißt bevorzugt mittig am Rad montiert ist. Er kann dies auch protokollieren, um etwa durchgeführte Messungen nachträglich nachprüfbar zu halten.

Die mittige Anordnung der beiden Sensoren der Messeinrichtung auf dem Rad bietet eine besonders einfache Auswertung der Signale, wie sich auch schon aus den oben stehenden Formeln ergibt. Es ist jedoch grundsätzlich auch denkbar, den Sensor außerhalb der Mitte des Rades in einem Abstand zu befestigen, falls dies aus baulichen oder anderen Gründen einen Vorteil bietet. Die Berechnung der absoluten Geschwindigkeit und der vorhergehenden Werte wird dann allerdings komplizierter Bei derartigen Berechnungen muss dann die Beschleunigung, die durch die Zentrifugalkraft bewirkt wird, zusätzlich mit berücksichtigt werden.

Es ist auch eine Messeinrichtung mit mehr als zwei Beschleunigungssensoren denkbar. Dies würde die Auflösung der Winkelgeschwindigkeit und der einzelnen Daten erhöhen und somit die Genauigkeit der gesamten Messeinrichtung verbessern. Natürlich würde sich die Auswertung dadurch komplizieren.

Die Messwerte der Signale der Sensoren können auf verschiedenste Weise vom Rad zum Fahrzeug hin oder beispielsweise auch zu einem ortsfesten Empfänger hin übermittelt werden, etwa drahtlos mittels Funk, Licht Induktion oder gegebenenfalls auch drahtgebunden, etwa über Schleifkontakte.

Die Daten können über ein Protokoll übermittelt werden, die beiden Sensoren können sich hierbei authentifizieren, sodass sie in einem Messsystem nicht nachträglich ausgetauscht werden können. Das Protokoll kann auch bidirektional abgewickelt werden, sodass die beiden Sensoren von außen gesteuert werden. Es können auch mehrere Sensoren im gleichen Funknetzwerk parallel betrieben und eindeutig adressiert werden.

Im folgenden wird anhand der Zeichnungen ein Ausführungsbeispiel der Erfindung näher beschrieben. Es zeigen:

**Figur 1**    eine schematische Ansicht eines Rades eines Fahrzeuges mit einem Teil der erfindungsgemäßen Anordnung;

**Figur 2**    einen Signalverlauf, der mit der erfindungsgemäßen Vorrichtung aufgezeichnet wird, bei konstanter Fahrzeuggeschwindigkeit V;

**Figur 3**    einen weiteren Signalverlauf, der bei einer Veränderung der Geschwindigkeit des Fahrzeuges entsteht;

**Figur 4**    eine schematische Darstellung einer Anordnung nach der Erfindung;

**Figur 5**    ein Schema zum Verlauf einer Auswertung und Selbstkalibrierung.

Die erfindungsgemäße Messeinrichtung wird an einem Beispiel beschrieben, bei dem ein Rad 5 eines im Übrigen nicht dargestellten Fahrzeuges auf einer Fahrbahn 7 läuft.

Das Rad 5 besitzt einen Radius *R.* Es dreht sich um die senkrecht zur Bildebene stehende Achse mit einer Winkelgeschwindigkeit $\omega$ in dem dargestellten Beispiel nach rechts. Dadurch bewegt sich die Achse des Rades 5 und somit auch das nicht dargestellte Fahrzeug mit der Geschwindigkeit *v* ebenfalls nach rechts.

Das Fahrzeug mit samt dem Rad 5 wird durch die Schwerkraft auf der Fahrbahn 7 gehalten; angedeutet ist die Erdbeschleunigung g, die senkrecht zur Fahrbahn 7 nach unten wirkt.

In der Mitte des Rades 5 befinden sich zwei Sensoren 10 und 20. Jeder der beiden Sensoren 10 und 20 ist ein Beschleunigungssensor und misst die auf ihn in einer bestimmten Richtung wirkende Beschleunigung. Da beide Sensoren 10 und 20 sich mit dem Rad 5 drehen, empfinden sie die Erdbeschleunigung als Sinusschwingung, wenn die Drehung des Rades 5 mit einer bestimmten Geschwindigkeit v erfolgt.

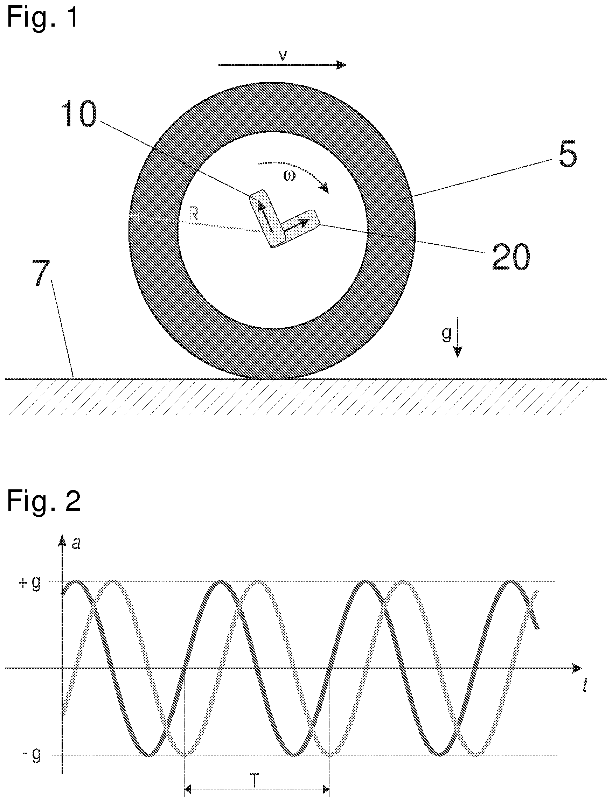

In der **Figur 2** ist dieser Signalverlauf dargestellt. Die Messwerte der beiden Sensoren sind dabei nach oben aufgetragen, nach rechts dagegen die Zeit *t*.

Man sieht die beiden, identischen, aber im dargestellten Beispiel um 90° beziehungsweise $\pi/2$ versetzten Schwingungen, die zwischen +*g* und -*g* verlaufen.

Die Periodenlänge *T* verhält sich dabei zur Winkelgeschwindigkeit $\omega$ wie *T=1/$\omega$.* Die Geschwindigkeit des Rades ist somit *v=2$\pi$R$\omega$.* Auch die Beschleunigung a in Fahrtrichtung ließe sich in ähnlicher Form aus der Winkelbeschleunigung errechnen, wäre dann aber abhängig von dem Radius *R* des Rades 5.

Wie schon oben ausgeführt, würde auch bei einer nicht konstanten Winkelgeschwindigkeit $\omega$ jedoch für die Messwerte der beiden einzelnen Sensoren gelten:

$$a_x(t)=g\,\cos(\omega t)-a\,\sin(\omega t)$$

$$a_y(t)=g\,\sin(\omega t)+a\,\cos(\omega t)$$

Setzt man die beiden Formeln ins Quadrat und addiert sie, so entfallen auf Grund der binomischen Formeln sämtliche schwingungsabhängigen Komponenten und es ergibt sich unmittelbar die Beschleunigung in Fahrtrichtung ohne eine Abhängigkeit von dem Radius *R* des Rades 5 oder Winkelgeschwindigkeit $\omega$ zu

$$a_x^2 + a_y^2 = g^2 + a^2$$

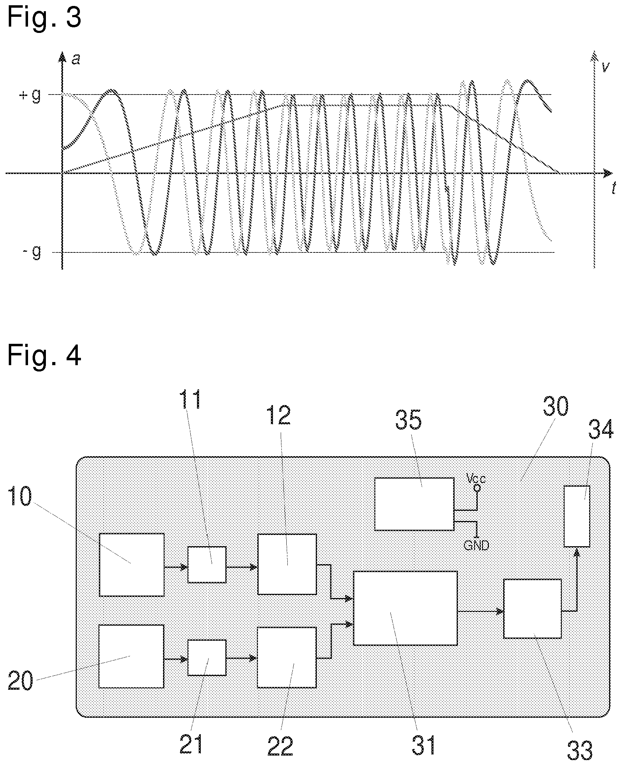

Bei einer Geschwindigkeitsänderung ergibt sich prinzipiell der dargestellte Verlauf der Sensorsignale, wie in **Figur 3** dargestellt, wobei eine ähnliche Darstellung, wie in der **Figur 2** gewählt ist.

Einen praktischen Aufbau einer erfindungsgemäßen Messeinrichtung zeigt **Figur 4.** Er ist rein schematisch dargestellt und zeigt, dass die Messwerte der Sensoren 10 und 20 jeweils an ein Filter 11 beziehungsweise 21 weitergegeben werden, von wo sie als gefilterte Messwerte zu je einem Analog-Digital-Umsetzer 12 beziehungsweise 22 geführt werden.

Die Ausgänge der beiden Umsetzer 12 und 22 werden einem Mikrokontroller 31 in einer Auswerteeinheit 30 zugeführt. Diese berücksichtigt noch eine Zeitbasis (f=konstant). Schematisch ist noch vorgesehen, dass die Daten dann über eine Funkschnittstelle 33 zu einer Antenne 34 abgegeben werden. Dies ist eine Ausführungsform, die auch die Auswerteeinheit 30 am Rad 5 vorsieht.

Auch eine Stromversorgung 35 ist vorgesehen.

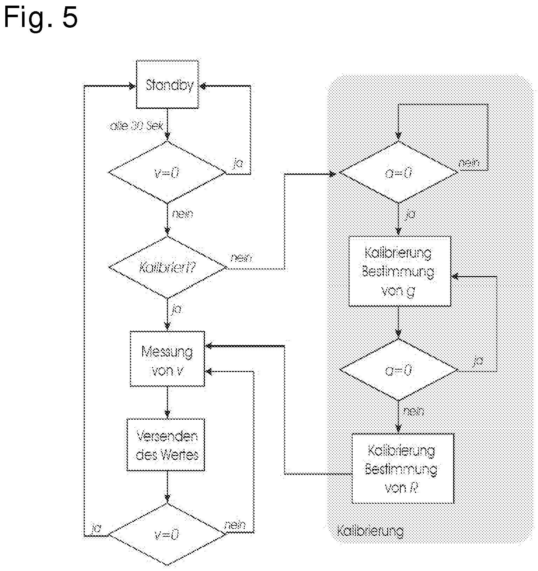

In der **Figur 5** ist noch schematisch der mögliche Ablauf einer Auswertung dargestellt. Dabei ist auch der Verlauf bei einer etwaigen Kalibrierung berücksichtigt.

**Verwendete Formelzeichen**

| | |
|---|---|
| *a* | Fahrzeugbeschleunigung |
| $\bar{a}$ | Mittelwert der Fahrzeugbeschleunigung über einen diskreten Zeitraum |
| $a_x$ | Beschleunigungssignal des ersten Sensors |
| $a_y$ | Beschleunigungssignal des ersten Sensors |
| *g* | Erdbeschleunigung |
| *V* | Fahrzeuggeschwindigkeit |
| *R* | Raddurchmesser |
| *T* | Periodenlänge der gemessenen Sinusschwinung |
| $\Delta t$ | Zeitdifferenz zwischen zwei aufeinanderfolgenden Periodenlängen |
| $\omega$ | Winkelgeschwindigkeit |

$\Delta\omega$ Änderung der Winkelgeschwindigkeit in einem diskreten Zeitraum

$\Delta V$ Änderung der Fahrzeuggeschwindigkeit in einem diskreten Zeitraum

$v(t)$ variable Fahrzeuggeschwindigkeit zum Zeitpunkt $t$

$v_0$ Momentane Geschwindigkeit

$t$ Zeit

**Bezugszeichenliste**

5 Rad
7 Fahrbahn

10 Sensor
11 Filter
12 Umsetzer

20 Sensor
21 Filter
22 Umsetzer

30 Auswerteeinheit
31 Mikrokontroller
33 Funkschnittstelle
34 Antenne
35 Stromversorgung

**Patentansprüche**

1. Messeinrichtung für die Messung von Fahrzeugdaten, insbesondere der Geschwindigkeit eines auf Rädern laufenden Fahrzeuges,

a) mit einem ersten Sensor (10) zum Messen der auf den ersten Sensor (10) wirkenden Beschleunigung,
b) mit einem zweiten Sensor (20) zum Messen der auf den zweiten Sensor (20) wirkenden Beschleunigung,
c) wobei beide Sensoren (10, 20) an ein und dem selben Rad (5) angeordnet sind und sich mit diesem drehen, und
d) wobei beide Sensoren (10, 20) so angeordnet sind, dass sie Beschleunigungen messen, die jeweils senkrecht zur Achse des Rades (5) wirken und die in einem Winkel zueinander stehen,
e) mit einer Auswerteeinrichtung (30), der die Messwerte der beiden Sensoren (10, 20) zugeführt werden,
f) **dadurch gekennzeichnet, dass** die Auswerteeinrichtung (30) so ausgebildet und geschaltet ist, dass sie aus den Messwerten der beiden Sensoren (10, 20) die Beschleunigung der Achse des Rades (5) in Fahrtrichtung des Fahrzeuges und daraus die aktuelle Fahrzeuggeschwindigkeit ermittelt,
g) wobei die Auswerteeinrichtung (30) so ausgebildet und geschaltet ist, dass sie aus den gleichen Messwerten auch die Winkelbeschleunigung des Rades (5) über die Änderung der Drehfrequenz ermittelt und durch Vergleich dieser Auswertung mit der Beschleunigung der Achse des Rades in Fahrtrichtung (5) der Durchmesser des Rades (5) absolut ermittelt wird.

2. Messeinrichtung nach Anspruch 1,
**dadurch gekennzeichnet,**
**dass** die Auswerteeinrichtung (30) so ausgebildet und geschaltet ist, dass aus dem so ermittelten absoluten Durchmesser des Rades (5) und den Messwerten der beiden Sensoren (10, 20) die absolute Fahrzeuggeschwindigkeit bestimmt wird.

3. Messeinrichtung nach Anspruch 1 oder 2,
**dadurch gekennzeichnet,**
**dass** die beiden Sensoren (10, 20) jeweils Beschleunigungen messen, die im gleichen Punkt wirken.

4. Messeinrichtung nach einem der vorstehenden Ansprüche,
**dadurch gekennzeichnet,**
**dass** die beiden Sensoren (10, 20) jeweils Beschleunigungen messen, die senkrecht zueinander wirken.

5. Messeinrichtung nach einem der vorstehenden Ansprüche,
**dadurch gekennzeichnet,**
**dass** die beiden Sensoren (10, 20) in der Mitte des Rades (5) angeordnet sind.

6. Verfahren für die Messung von Fahrzeugdaten, insbesondere der Geschwindigkeit eines auf Rädern laufenden Fahrzeuges,

a) bei dem während der Bewegung des Fahrzeuges und der Drehung eines Rades (5) eine erste, auf einen sich mit dem Rad (5) drehenden Punkt und senkrecht zur Achse des Rades wirkende Beschleunigung gemessen wird,
b) bei dem während der Bewegung des Fahrzeuges und der Drehung eines Rades (5) eine zweite, auf einen sich mit dem Rad (5) drehenden Punkt und senkrecht zur Achse des Rades wirkende Beschleunigung gemessen wird, die in einem Winkel zur ersten Beschleunigung wirkt,
c) bei dem die Messwerte der beiden gemessenen Beschleunigungen einer Auswerteeinrichtung (30) zugeführt werden,
**dadurch gekennzeichnet, dass**
d) die Messwerte miteinander verknüpft und daraus die Beschleunigung der Achse des Rades (5) des Fahrzeuges in Fahrtrichtung ermittelt wird,

e) bei dem aus dieser ermittelten Beschleunigung die aktuelle Fahrzeuggeschwindigkeit ermittelt wird, und

f) bei dem aus den gleichen Messwerten auch die Winkelbeschleunigung des Rades (5) über die Änderung der Drehfrequenz ermittelt und durch Vergleich dieser Auswertung mit der Beschleunigung der Achse des Rades (5) in Fahrtrichtung der Durchmesser des Rades (5) absolut ermittelt wird.

7. Verfahren nach Anspruch 6,
**dadurch gekennzeichnet,**
**dass** aus dem so ermittelten Durchmesser des Rades und den Messwerten der beiden Sensoren die absolute Fahrzeuggeschwindigkeit bestimmt wird.

8. Verfahren nach Anspruch 6 oder 7,
**dadurch gekennzeichnet,**
**dass** die zweite Messung senkrecht zur ersten Messung erfolgt.

9. Verfahren nach einem der Ansprüche 6 bis 8,
**dadurch gekennzeichnet,**
**dass** die beiden Messungen an einem Punkt in der Mitte des Rades erfolgen.

10. Verfahren nach Anspruch 9,
**dadurch gekennzeichnet,**
**dass** die Messwerte quadriert und addiert werden und
**dass** das Ergebnis mit dem Quadrat der Erdbeschleunigung verglichen wird.

11. Verfahren nach einem der Ansprüche 6 bis 10,
**dadurch gekennzeichnet,**
**dass** die Messwerte hinsichtlich von Störsignalen gefiltert werden.

12. Verfahren nach einem der Ansprüche 6 bis 11,
**dadurch gekennzeichnet,**
**dass** die Messwerte in einem weiteren Schritt mit einem durch ein anderes Verfahren oder anderen ermittelten Geschwindigkeitswert verglichen und daraus ein aktueller Wert des Durchmessers des Rades (5) ermittelt wird.

13. Verfahren nach Anspruch 12,
**dadurch gekennzeichnet,**
**dass** der ermittelte Wert des Durchmessers des Rades mit Vergleichswerten und/oder früher ermittelten Werten verglichen und daraus auf Abnutzung und/oder Reifendruck geschlossen wird.

14. Verfahren nach einem der Ansprüche 6 bis 13,
**dadurch gekennzeichnet,**

**dass** die Messwerte mit einem mittels eines anderen Verfahrens ermittelten Wert für den Durchmesser des Rades (5) ergänzt und daraus der Schlupf des Rades (5) gegenüber der Fahrbahn (7) ermittelt wird.

15. Verfahren nach einem oder mehreren der Ansprüche 6 bis 14,
**dadurch gekennzeichnet,**
**dass** die mittels der Auswerteeinrichtung ermittelten Werte von einer Videoeinrichtung den mit diesen aufgenommenen Videoaufnahmen als Information hinzugefügt werden.

**Claims**

1. Measuring device for measuring vehicle data, in particular the speed of a vehicle running on wheels,

a) with a first sensor (10) for measuring the acceleration acting on the first sensor (10),
b) with a second sensor (20) for measuring the acceleration acting on the second sensor (20),
c) wherein the two sensors (10, 20) are arranged on precisely the same wheel (5) and rotate with this, and
d) wherein the two sensors (10, 20) are arranged so that they measure accelerations, which each act perpendicularly to the axis of the wheel (5) and which are disposed at an angle to one another,
e) with an evaluation device (30), to which the measured values of the two sensors (10, 20) are fed,
f) **characterized in that** the evaluation device (30) is configured and connected so that it determines the acceleration of the axis of the wheel (5) in the direction of travel of the vehicle from the measured values of the two sensors (10, 20) and determines the current vehicle speed therefrom,
g) wherein the evaluation device (30) is configured and connected so that from the same measured values it also determines the angular acceleration of the wheel (5) by means of the change of the rotational frequency and the diameter of the wheel (5) is absolutely determined by comparing this evaluation with the acceleration of the axis of the wheel in the direction of travel (5).

2. Measuring device according to claim 1,
**characterised in that** the evaluation device (30) is configured and connected so that the absolute vehicle speed is determined from the thus determined absolute diameter of the wheel (5) and the measured values of the two sensors (10, 20).

**3.** Measuring device according to claim 1 or 2, **characterised in that** the two sensors (10, 20) each measure accelerations, which act on the same point.

**4.** Measuring device according to one of the preceding claims, **characterised in that** the two sensors (10, 20) each measure accelerations, which act perpendicularly to one another.

**5.** Measuring device according to one of the preceding claims, **characterised in that** the two sensors (10, 20) are arranged in the centre of the wheel (5).

**6.** Method for measuring vehicle data, in particular the speed of a vehicle running on wheels,

a) in which, during the movement of the vehicle and the rotation of a wheel (5), a first acceleration is measured, which acts on a point rotating with the wheel (5) and perpendicularly to the axis of the wheel,

b) in which, during the movement of the vehicle and the rotation of a wheel (5), a second acceleration is measured, which acts on a point rotating with the wheel (5) and perpendicularly to the axis of the wheel (5) and which acts at an angle to the first acceleration,

c) in which the measured values of the two measured accelerations are fed to an evaluation device (30),

d) **characterised in that** the measured values are linked to each other and the acceleration of the axis of the wheel (5) of the vehicle in the direction of travel is determined therefrom,

e) in which the current vehicle speed is determined from this determined acceleration, and

f) in which from the same measured values the angular acceleration of the wheel (5) is also determined by means of the change of the rotational frequency and the diameter of the wheel (5) is absolutely determined by comparing this evaluation with the acceleration of the axis of the wheel (5) in the direction of travel.

**7.** Method according to claim 6, **characterised in that** the absolute vehicle speed is determined from the thus determined diameter of the wheel and the measured values of the two sensors.

**8.** Method according to claim 6 or 7, **characterised in that** the second measurement is conducted perpendicularly to the first measurement.

**9.** Method according to one of claims 6 to 8, **characterised in that** the two measurements are conducted at a point in the centre of the wheel.

**10.** Method according to claim 9, **characterised in that** the measured values are squared and added, and that the result is compared with the square of the acceleration due to gravity.

**11.** Method according to one of claims 6 to 10, **characterised in that** the measured values are filtered with respect to interference signals.

**12.** Method according to one of claims 8 to 11, **characterised in that** in a further step the measured values are compared with a speed value determined by a different method or a different determined speed value and a current value of the diameter of the wheel (5) is determined therefrom.

**13.** Method according to claim 12, **characterised in that** the determined value of the diameter of the wheel is compared with comparative values and/or previously determined values and the wear and/or tyre pressure is deduced therefrom.

**14.** Method according to one of claims 6 to 13, **characterised in that** the measured values are supplemented with a value for the diameter of the wheel (5) determined by means of a different method and the slip of the wheel (5) relative to the running surface (7) is determined therefrom.

**15.** Method according to one or more of claims 6 to 14, **characterised in that** the values determined by means of the evaluation device are added by a video device as information to the video recordings recorded by this video device.

## Revendications

**1.** Système de mesure pour la mesure de données de véhicule, en particulier de la vitesse d'un véhicule sur roues,

a) avec un premier capteur (10) servant à mesurer l'accélération agissant sur le premier capteur (10),

b) avec un deuxième capteur (20) servant à mesurer l'accélération agissant sur le deuxième capteur (20),

c) dans lequel les deux capteurs (10, 20) sont disposés au niveau d'une seule et même roue (5) et tournent avec cette dernière, et

d) dans lequel les deux capteurs (10, 20) sont disposés de telle sorte qu'ils mesurent des accélérations, qui agissent respectivement de manière perpendiculaire par rapport à l'essieu de la roue (5) et qui se trouvent selon un angle donné les unes par rapport aux autres,

e) avec un système d'analyse (30), auquel les valeurs de mesure des deux capteurs (10, 20) sont amenées,

**caractérisé en ce que**

f) le système d'analyse (30) est réalisé et commuté de telle sorte qu'il détermine, à partir des valeurs de mesure des deux capteurs (10, 20), l'accélération de l'essieu de la roue (5) dans la direction de déplacement du véhicule, et **en ce que** la vitesse de véhicule instantanée en est déterminée,

g) dans lequel le système d'analyse (30) est réalisé et commuté de telle sorte qu'il détermine, à partir des valeurs de mesure identiques, également l'accélération angulaire de la roue (5) par l'intermédiaire du changement de la fréquence de rotation et le diamètre de la roue (5) est déterminé de manière absolue par la comparaison de ladite analyse à l'accélération de l'essieu de la roue dans la direction de déplacement (5).

2. Système de mesure selon la revendication 1, **caractérisé en ce que** le système d'analyse (30) est réalisé et commuté de telle sorte que la vitesse de véhicule absolue est définie à partir du diamètre absolu ainsi déterminé de la roue (5) et à partir des valeurs de mesure des deux capteurs (10, 20).

3. Système de mesure selon la revendication 1 ou 2, **caractérisé en ce que** les deux capteurs (10, 20) mesurent respectivement des accélérations, qui agissent dans le point identique.

4. Système de mesure selon l'une quelconque des revendications précédentes, **caractérisé en ce que** les deux capteurs (10, 20) mesurent respectivement des accélérations, qui agissent de manière perpendiculaire les unes par rapport aux autres.

5. Système de mesure selon l'une quelconque des revendications précédentes, **caractérisé en ce que** les deux capteurs (10, 20) sont disposés au centre de la roue (5).

6. Procédé pour la mesure de données de véhicule, en particulier de la vitesse d'un véhicule sur roues,

a) où une première accélération agissant sur un point tournant avec la roue (5) et de manière perpendiculaire par rapport à l'essieu de la roue est mesurée au cours du déplacement du véhicule et de la rotation d'une roue (5),

b) où une deuxième accélération agissant sur un point tournant avec la roue (5) et de manière perpendiculaire par rapport à l'essieu de la roue est mesurée au cours du déplacement du véhicule et de la rotation d'une roue (5), laquelle accélération agit selon un angle donné par rapport à la première accélération,

c) où les valeurs de mesure des deux accélérations mesurées sont amenées à un système d'analyse (30), **caractérisé en ce que**

d) où les valeurs de mesure sont combinées les unes aux autres, et l'accélération de l'essieu de la roue (5) du véhicule dans la direction de déplacement en est déterminée,

e) où la vitesse de véhicule instantanée est déterminée à partir de ladite accélération déterminée, et

f) où l'accélération angulaire de la roue (5) est également déterminée, à partir des valeurs de mesure identiques, par l'intermédiaire du changement de la fréquence de rotation, et le diamètre de la roue (5) est déterminé de manière absolue par la comparaison de ladite analyse à l'accélération de l'essieu de la roue (5) dans la direction de déplacement.

7. Procédé selon la revendication 6, **caractérisé en ce que** la vitesse de véhicule absolue est définie à partir du diamètre ainsi déterminé de la roue et à partir à des valeurs de mesure des deux capteurs.

8. Procédé selon la revendication 6 ou 7, **caractérisé en ce que** la deuxième mesure est effectuée de manière perpendiculaire par rapport à la première mesure.

9. Procédé selon l'une quelconque des revendications 6 à 8, **caractérisé en ce que** les deux mesures sont effectuées en un point au centre de la roue.

10. Procédé selon la revendication 9, **caractérisé en ce que** les valeurs de mesure sont élevées au carré et sont additionnées, et **que** le résultat est comparé au carré de l'accélération terrestre.

11. Procédé selon l'une quelconque des revendications 6 à 10, **caractérisé en ce que** les valeurs de mesure sont filtrées en matière de signaux parasites.

12. Procédé selon l'une quelconque des revendications 6 à 11, **caractérisé en ce que** les valeurs de mesure sont comparées, lors d'une autre étape, à une valeur de vitesse déterminée par un autre procédé, et en ce qu'une valeur instantanée du diamètre de la roue (5) en est déterminée.

13. Procédé selon la revendication 12,
**caractérisé en ce**
**que** la valeur déterminée du diamètre de la roue est comparée à des valeurs de comparaison et/ou à des valeurs déterminées antérieurement, et en ce qu'on en conclut l'usure et/ou la pression des pneus.

14. Procédé selon l'une quelconque des revendications 6 à 13,
**caractérisé en ce**
**que** les valeurs de mesure sont complétées par une valeur déterminée au moyen d'un autre procédé pour le diamètre de la roue (5), et en ce que le patinage de la roue (5) par rapport à la chaussée (7) en est déterminé.

15. Procédé selon l'une quelconque ou plusieurs des revendications 6 à 14,
**caractérisé en ce**
**que** les valeurs déterminées au moyen du système d'analyse sont ajoutées, par un système vidéo, à des enregistrements vidéo pris à l'aide de ce dernier, en tant qu'information.

## Fig. 1

## Fig. 2

## Fig. 3

## Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10037377 A1
- DE 102005014500 A1
- US 6466887 B1
- EP 0517082 A2